# EUROPÄISCHE PATENTSCHRIFT

(11) **EP 0 313 982 B1**
(45) Veröffentlichungstag und Bekanntmachung des Hinweises auf die Patenterteilung: **30.06.1993**
(21) Anmeldenummer: 88117452.8
(22) Anmeldetag: 20.10.1988
(51) Int. Cl.: C08L 69/00, C08K 5/42, H01B 3/42

(54) **Verwendung von Alkali- oder Erdalkalisalzen von Sulfobernsteinsäureestern als interne Antistatika, Abzieh- und Wickelhilfen für transparente Polycarbonatfolien;sowie Polycarbonatgiessfolien und deren Herstellung**
Use of alkaline or earthalkaline salts from esters of sulfosuccinic acid as internal antistatic agents, peeling and winding agents for transparent polycarbonate films; cast polycarbonate sheets and their preparation
Utilisation de sels alcalins ou alcalinoterreux d'esters d'acide sulfosuccinique comme agents antistatiques internes et d'aides de pelage et d'enroulement pour films transparents de polycarbonates; films coulés de polycarbonate et leur préparation

(30) Priorität: 30.10.1987 DE 3736749
(43) Veröffentlichungstag der Anmeldung: 03.05.1989
(73) Patentinhaber: BAYER AG, 51368 Leverkusen (DE)
(72) Erfinder: Wiskamp, Volker, Dr., D-4330 Mülheim/Ruhr (DE); Nerger, Dittmar, Dr., D-4150 Krefeld (DE); Schulte,Bernhard, Dr., D-4150 Krefeld (DE); Waldenrath, Werner, Dipl.-Ing., D-5000 Koln 1 (DE); Burkhardt, Claus, Dr., D-4150 Krefeld 1 (DE)

(56) Entgegenhaltungen:
- EP-A- 0 130 872
- PATENT ABSTRACTS OF JAPAN, Band 7, Nr. 235 (C-191)[1380], 19. Oktober 1983
- PATENT ABSTRACTS OF JAPAN, vol. 12, no. 47 (C-475)[2894], 12. Februar 1988

## Beschreibung

Gegenstand der vorliegenden Erfindung ist die Verwendung von Alkalisalzen oder Erdalkalisalzen von Sulfobernsteinsäureestern der Formel 1 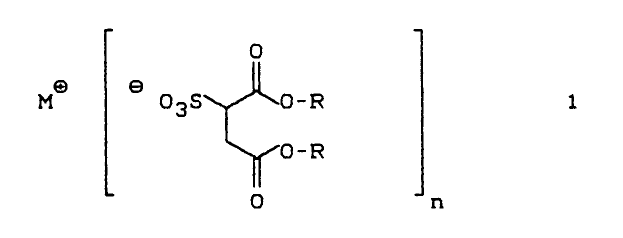
mit
- M =: Alkalimetallkation und n = 1 oder
- M=: Erdalkalimetallkation und n = 2 und
- R =: C₄-C₂₀-Alkyl, C₄-C₂₀-Alkenyl, C₆-C₂₀-Cycloalkyl, C₆-C₂₀-Cycloalkenyl
als interne Antistatika , Abzieh- und Wickelhilfen für transparente Gießfolien aus hochmolekularen, thermoplastischen, aromatischen Polycarbonaten in Mengen von 0,01 bis 2 Gew.-%, vorzugsweise von 0,05 bis 1 Gew.-% bezogen auf Gesamtgewicht an Polycarbonat und Salz der Formel 1.

Polycarbonatfolien mit diesem Gehalt an Salzen der Formel 1 sind außerdem in ihrer Transparenz kaum beeinflußt, haben also beispielsweise einen Trübungswert von 0 % bis maximal 2 %. (Der Trübungswert wird gemessen nach ASTM-D-1003).

Die antistatischen Eigenschaften äußern sich darin, daß der Oberflächenwiderstand (gemessen nach (DIN 53 482) weniger als 10¹⁴ Ohm beträgt.

Die zugesetzten Salze wirken somit einerseits als interne Antistatika indem sie den Oberflächenwiderstand der Folie erniedrigen, ohne den spezifischen Durchgangswiderstand ρ_{D} zu verändern und ohne das Polycarbonat zu schädigen.

Andererseits bewirken die zugesetzten Salze, daß sich die Folie von der Gießunterlage wie z.B. polierten oder aufgerauhten Materialien wie Stahl oder Chrom in Form von Gießtrommeln oder -bändern leicher abziehen, über die Walzen in nachfolgenden Trocknern besser führen und bei herkömmlichen Aufwicklungen besser wickeln läßt.

In der DE-A-2 653 327 und in der DE-A-2 460 787 sind Polycarbonatzusammensetzungen beschrieben, die aliphatische, Alkai- oder Erdalkalisulfonate enthalten. Zweck dieser Zusätze ist die Verbesserung der Flammwidrigkeit der Polycarbonate.

Aus der DE-A-2 931 172 und der DE-A-3 004 017 ist die Verwendung von Sulfonsäuresalzen als Antistatika in Polycarbonatfolien bekannt. Derartige Folien haben jedoch im allgemeinen höhere Trübungswerte.

Aus der DE-A-2 458 968 ist außerdem der Zusatz von Alkali- bzw. Erdalkalisulfonaten von Phenolsulfonsäureestern zu Polycarbonaten bekannt, welcher den Polycarbonaten flammhemmende Eigenschaften verleiht. Unter anderem wird in einem Beispiel das Dinatrium-bis-(4-chlorphenyl)-succinat-2,2′-disulfonat eingesetzt (Seite 11 der DE-A-2 458 968).

Auch derartige Salze erzeugen im allgemeinen höhere Trübungswerte im Polycarbonat.

Aus der DE-A-2 648 131 sind nicht-opake flammhemmende Polycarbonatzusammensetzungen bekannt, welche Alkali- und Erdalkalimetallsalze von Phenolestersulfonsäuren enthalten, wobei das Polycarbonat und das Salz einen Brechungsindex von 1.54 bis 1,65 aufweisen. Succinate sind darin nicht erwähnt.

Aus der DE-A-2 460 052 ist außerdem die Herstellung schwerhemmbarer thermoplastischer Polycarbonate bekannt, die durch den Zusatz von löslichen basischen Alkalisalzen hergestellt werden. Alkalisalze der Bernsteinsäure können u.a. zugesetzt werden (Seite 8 der DE-A-2 460 052). Die Einarbeitung dieser Salze erfolgt bei Temperaturen zwischen 250°C und 400°C und verursachen durch partielle Vernetzung der Polycarbonate Schwerbrennbarkeit

Es ist außerdem bekannt, Folien oder Formkörper durch nachträgliche Behandlung mit einem externen Antistatikum antistatisch auszurüsten, beispielsweise durch Bestreichen einer Folie mit der Lösung einer antistatisch wirksamen Chemikalie, wobei der Oberflächenwiderstand R_{OA} der Folie oder des Formteils reduziert und eine elektrostatische Aufladung vermindert oder ganz vermieden werden kann (vgl. GB-A-852 923 oder NL 6 411 681).

Derartige Folien zeigen jedoch nur kurzzeitig ein ausreichend antistatisches Verhalten, da durch Witterungseinflüsse und äußerliche mechanische Einflüsse die oberflächlich aufgebrachte Beschichtung des antistatisch wirkenden Mittels wieder rasch entfernt werden kann.

Eine andere Möglichkeit, Folien oder Formteile antistatisch auszurüsten besteht darin, eine leitfähige Schicht aus beispielsweise Ruß oder Metall aufzutragen. Dadurch wird die Transparenz der Folien vermindert und die Folien werden anfällig gegen jede äußere mechanische Beanspruchung, durch die leicht ein Abblättern oder Einreißen der Beschichtung verursacht werden kann.

Es ist ebenfalls bekannt, daß der Oberflächenwiderstand R_{OA} von Folien durch Zumischen von Ruß in Gewichtsmengen bis zu 30 % herabgesetzt werden kann.

Derartig schwarz eingefärbte Folien besitzen ein deutlich verschlechtertes mechanisches Eigenschaftsbild; gleichfalls wird mit der Verminderung des Oberflächenwiderstandes R_{OA} der Folie auch deren spezifischer Durchgangswiderstand ρ_{D} reduziert, wodurch eine Verwendung der Folie beispielsweise als Elektroisoliermaterial nicht mehr möglich ist.

Es ist außerdem bekannt, daß die allgemeine Tendenz von Polycarbonatfolien zum Haften auf Walzen und zum Blocken beim Aufwickeln durch Einarbeiten von Gleitmitteln (Antiblockmittel) in die Folien verringert werden kann.

Beispiele für Antiblockmittel, die in der Vergangenheit benutzt wurden, sind z.B. Silikagele oder Talkum. Diese anorganischen Stoffe haben zwei wesentliche Nachteile: Erstens sind sie im Polymer nicht löslich und führen daher zu einer deutlichen Trübung der Folie, zweitens lassen sie sich nur schwer gleichmäßig im Polymeren dispergieren, so daß sich häufig Agglomerate der Salze bilden und die Folie insgesamt inhomogen wird und ein verschlechtertes mechanisches Eigenschaftsbild aufweist.

Überraschenderweise wurde gefunden, daß wie bereits eingangs erwähnt, Polycarbonatfolien, die 0,01-2 Gew.-%, vorzugsweise 0,05 bis 1 Gew.-%, bezogen auf das Gesamtgewicht aus Polycarbonat und Salzzusatz, eines Alkali- oder Erdalkalisalzes eines Sulfobernsteinsäureesters der Formel 1 zugemischt enthalten, einen verminderten Oberflächenwiderstand R_{OA} aufweisen, wobei deren spezifischer Durchgangswiderstand ρ_{D}, den Werten der additivfreien Folie entspricht. Darüber hinaus zeigen die Folien gegenüber einer reinen Polycarbonatfolie deutlich besseres Abzugs-und Wickelverhalten. Gleichzeitig weicht die Trübung der Folien nur unwesentlich von der einer additivfreien Folie ab.

Unter aromatischen Polycarbonaten im Sinne der Erfindung werden Homopolycarbonate und Copolycarbonate verstanden, denen z.B. ein oder mehrere der folgenden Bisphenole zugrundeliegen:
Hdyrochinon,
Resorcin,
Dihdyroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α′-Bis-(hydroxyphenyl)-diisopropyl-benzole
sowie deren kernalkylierte und kernhalogenierte Verbindungen. Diese und weitere geeignete aromatische Dihydroxyverbindungen sind z.B. in den US-Patentschriften US-A-3 028 365, 2 999 835, 3 148 172, 3 275 601, 2 991 273, 3 271 367, 3 062 781, 2 970 131 und 2 999 846, in den deutschen Offenlegungsschriften DE-A-1 570 703, 2 063 050, 2 063 052, 2 211 956, 2 211 977, der französischen Patentschrift FR-A 1 156 518 und in der Monographie "H. Schnell, Chemistry and Physics of Polycarbonates, Interscience Publishers, New York, 1964" beschrieben.

Bevorzugte Bisphenole sind die der Formel 2 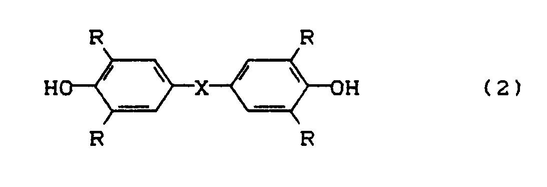
in der R gleich oder verschieden ist und H, C₁-C₄-Alkyl, C1 oder Br bedeutet und in der X eine Bindung, C₁-C₈-Alkylen, C₂-C₈-Alkyliden, C₅-C₁₅-Cycloalkylen, C₅-C₁₅-Cycloalkyliden, -SO₂ oder 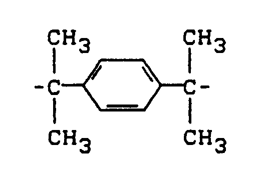
ist.

Beispiele für diese Bisphenole sind:
4,4′-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α′-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α′-Bis-(3,5-dimethyl-4-hydroxyphenyl)-p-diisopropyl-benzol
2,2-Bis-(3,5-dichlor-4-hydroxyphenyl)-propan
2,2-Bis-(3,5-dibrom-4-hdyroxyphenyl)-propan.

Besonders bevorzugte Bisphenole sind z.B.:
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate sind solche, denen ein oder mehrere der als bevorzugt genannten Bisphenole zugrundeliegen. Besonders bevorzugt werden Copolycarbonate, denen 2,2-Bis-(4-hydroxyphenyl)-propan und eines der anderen als besonders bevorzugt genannten Bisphenole zugrundeliegen. Besonders bevorzugt sind weiterhin Polycarbonate allein auf Basis von 2,2-Bis-(4-hydroxyphenyl) propan oder 2,2-Bis-(3,5-dimethyl-4-hydroxyphenyl)-propan.

Die aromatischen Polycarbonate können nach bekannten Verfahren hergestellt werden, so z.B. nach dem Schmelzumesterungsverfahren aus Bisphenolen und Diphenylcarbonat und dem Zweiphasengrenzflächenverfahren aus Bisphenolen und Phosgen, wie es in der obengenannten Literatur beschrieben ist.

Die aromatischen Polycarbonate können auch durch den Einbau geringer Mengen an Polyhydroxyverbindungen, z.B. 0,05 - 2,0 Mol-% (bezogen auf die eingesetzten Bisphenole), verzweigt sein. Polycarbonate dieser Art sind z.B. in den deutschen Offenlegungsschriften 1 570 533, 1 595 762, 2 116 974, 2 113 347, der britischen Patentschrift 1 079 821 und in der US-Patentschrift 3 544 514 beschrieben. Einige der verwendbaren Polyhydroxyverbindungen sind beispielsweise Phloroglucin, 4,6-Dimethyl-2,4, 6-tri-(4-hydroxyphenyl)-hepten-2, 4,6-Dimethyl-2,4, 6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-Bis(4-hydroxyphenyl-isopropyl)-phenol, 2,6-Bis-(2′-hydroxy-5′-methyl-benzyl)-4-methyl-phenol, 2,4-Dihydroxybenzoesäure, 2-(4-Hydroxyphenyl)-2-(2,4-dihydroxyphenyl)-propan und 1,4-Bis-(4′,4˝-dihydroxytriphenyl-methyl)-benzol.

Die aromatischen Polycarbonate sollen in der Regel Molekulargewichte M_{w} von 10 000 bis über 200 000, vorzugsweise von 20 000 bis 80 000 haben.

Als geeignete Alkali- und Erdalkalisalze im Sinne der Erfindung werden solche Lithium-, Natrium-, Kalium-, Calcium-, Magnesium- oder Bariumsalze der allgemeinen Formel 1 eingesetzt. Inbesondere bevorzugt wird Natrium-bis-(2-ethylhexyl)-sulfosuccinat

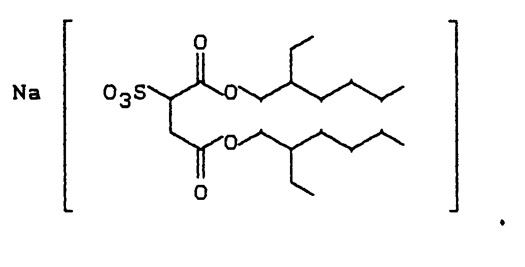

Die Herstellung der erfindungsgemäß einsetzbaren Salze der Formel 1 erfolgt, soweit nicht literaturbekannt, durch Neutralisation der entsprechenden freien Säuren mit den entsprechenden Alkali- bzw. Erdalkalihydroxiden in bekannter Weise, etwa in H₂O oder H₂O/Alkoholgemischen. Die Isolierung der Salze erfolgt in bekannter Weise.

Die Einarbeitung der Salze der Formel 1 erfolgt über die Lösungen der thermoplastischen Polycarbonate in seinen geläufigen Lösungsmitteln wie CH₂Cl₂, Chlorbenzol oder Gemischen aus CH₂Cl₂ und Chlorbenzol.

Das Salz der Formel 1 kann somit ebenfalls in dem Polycarbonatlösungsmittel gelöst werden und dann in der benötigten Mengen der seperat angefertigten Polycarbonatlösung zugesetzt werden.

Es können auch die unmittelbar aus der Polycarbonatherstellung nach dem Zweiphasengrenzflächenverfahren erhältlichen, neutral gewaschenen Lösungen von Polycarbonaten in den bekannten organischen Polycarbonatherstellungslösungsmitteln unmittelbar, ohne vorherige Isolierung des Polycarbonats für die Vermischung mit den Lösungen der Salze der Formel 1 eingesetzt werden. Die Salze der Formel 1 können auch als solche, weder gelöst in Lösungsmitteln, den Polycarbonatlösungen zugesetzt werden.

Aus den Polycarbonatlösungen können dann in bestimmter Weise Polycarbonatgießfolien hergestellt werden. (Siehe beispielsweise DE-A-1 274 274 und DE-A-2 517 032).

Gegenstand der vorliegenden Erfindung ist somit auch ein Verfahren zur Herstellung von Polycarbonatgießfolien, das dadurch gekennzeichnet ist, daß man Lösungen von thermoplastischen, aromatischen Polycarbonaten in ihren üblichen Lösungsmitteln mit Salzen der Formel 1 in Mengen von 0,01 bis 2, vorzugweise von 0,05 bis 1 Gew.-%, bezogen auf Gesamtgewicht Polycarbonat + Salz der Formel 1, entweder ebenfalls gelöst in den Polycarbonatlösungsmitteln oder in Substanz vermischt und die erhaltene Mischung anschließend in bekannter Weise zu Gießfolien verarbeitet.

Gegenstand der vorliegenden Erfindung sind außerdem Polycarbonatgießfolien mit einem Gehalt von 0,01 bis 2 Gew.-%, vorzugsweise von 0,05 bis 1 Gew.-%, bezogen auf Gesamtgewicht Polycarbonat + Salz, an Salzen der Formel 1.

Die zur Herstellung der Polycarbonatgießfolien geeigneten Polycarbonatlösungen sollen eine Konzentration von etwa 10 bis 15 Gew.-%, bezogen auf Polycarbonat + Lösungsmittel haben.

Die erfindungsgemäßen Polycarbonatgießfolien sollen vorzugsweise eine Dichte von etwa 10 µm bis 200 µm haben.

Den Polycarbonatlösungen können außer den Salzen der Formel 1 auch andere übliche Zusätze wie UV-Stabilisatoren oder Thermostabilisatoren vor der Gießfolienherstellung zugesetzt werden.

Die erfindungsgemäßen Polycarbonatgießfolien finden Verwendung auf den bekannten Polycarbonateinsatzgebieten insbesondere jedoch auf dem Elektrosektor, dem Verglasungssektor und insbesondere auf dem optischen Sektor.

Die in den Beispielen verwendeten Polycarbonatlösungsfolien besitzen Schichtdicken von 50 µm - 100 µm, bestehen aus einem Homopolycarbonat auf Basis von 2,2-Bis-(4-hydroxyphenyl)-propan mit einem mittleren Gewichtsmittelmolekulargewicht Mw = 57 000 (PC-Kalibrierung) und einer relativen Lösungsvikosität von ηᵣₑₗ = 1,75 gemessen in 0,5 %iger Lösung in Methylenchlorid, und wurden nach dem Gießverfahren aus einer Methylenchloridlösung hergestellt. Beispiel 1 ist die reine PC-Folie und dient zu Vergleichszwecken.

Das erfindungsgemäße Additiv (Na-bis-(2-ethylhexyl)-sulfosuccinat), ist literaturbekannt (Merck Index 10, 3409) und wurde in Methylenchlorid gelöst und der Polycarbonatlösung vor dem Vergießen zugefügt. Die in den nachfolgenden Beispielen beschriebenen Prüfungen der Oberflächenwiderstände R_{OA} erfolgten nach DIN 53 482 bei 23°C und einer relativen Luftfeuchte von 50 %.

Trübungswerte wurden nach ASTM-D-1003 gemessen.

| Beispiele | | | | |
|---|---|---|---|---|
| Bsp. | Additiv (Gew.-%) | R_{OA} (Ohm) | ρ_{D} (Ohm) | Trübung [%] |
| 1 | - | ∼ 10¹⁵ | >10¹⁶ | 0-1 |
| 2 | 0,1 | 3,0·10¹³ | 2,3·10¹⁶ | 1 |
| 3 | 0,5 | 83·10¹² | 2,0·10¹⁵ | 2 |

## Patentansprüche

1. Verwendung von Alkalisalzen oder Erdalkalisalzen von Sulfobernsteinsäureestern der Formel 1 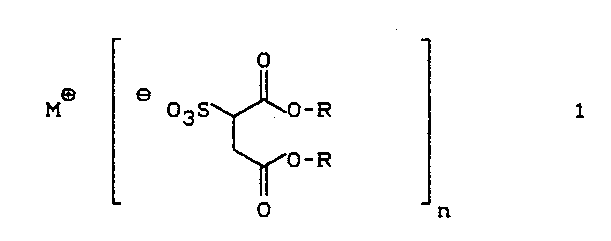 mit
M= Alkalimetallkation und n = 1 oder
M = Erdalkalimetallkation und n = 2 und
R = C₄-C₂₀-Alkyl, C₄-C₂₀-Alkenyl, C₆-C₂₀-Cycloalkyl, C₆-C₂₀-Cycloalkenyl
als interne Antistatika, Abzieh- und Wickelhilfen für Gießfolien aus hochmolekularen, thermoplastischen, aromatischen Polycarbonaten in Mengen von 0,01 bis 2 Gew.-%, bezogen auf Gesamtgewicht an Polycarbonat und Salz der Formel 1.

2. Verwendung gemäß Anspruch 1, in Mengen von 0,05 bis 1 Gew.-%, bezogen auf Gesamtgewicht an Polycarbonat und Salz der Formel 1 des Anspruchs 1.

3. Verfahren zur Herstellung von Polycarbonatgießfolien, dadurch gekennzeichnet, daß man Lösungen von thermoplastischen, aromatischen Polycarbonaten in ihren üblichen Lösungsmitteln mit Salzen der Formel 1 des Anspruchs 1 in Mengen von 0,01 bis 2 Gew.-%, bezogen auf Gesamtgewicht Polycarbonat + Salz der Formel 1, entweder ebenfalls gelöst in den Polycarbonatlösungsmitteln oder in Substanz vermischt, und die erhaltene Mischung anschließend in bekannter Weise zu Gießfolien verarbeitet.

4. Verfahren gemäß Anspruch 3, dadurch gekennzeichnet, daß man die Polycarbonatlösungen mit Salzen der Formel 1 des Anspruchs 1 in Mengen 0,05 bis 1 Gew.-% vermischt.

5. Polycarbonatgießfolien mit einem Gehalt von 0,01 bis 2 Gew.-%, bezogen auf Gesamtgewicht Polycarbonat + Salz, an Salzen der Formel 1 des Anspruchs 1.

6. Polycarbonatgießfolien des Anspruchs 5 mit einem Gehalt von 0,05 bis 1 Gew.-%, bezogen auf Gesamtgewicht Polycarbonat + Salz, an Salzen der Formel 1 des Anspruchs 1.

7. Verwendung der Polycarbonatfolien der Ansprüche 5 und 6 auf dem Elektrosektor und auf dem optischen Sektor.

## Claims

1. The use of alkali metal salts or alkaline earth metal salts of sulfosuccinic acid esters corresponding to the following formula 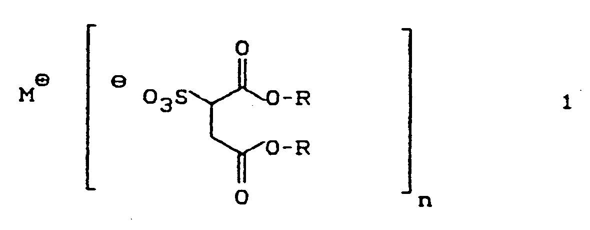 in which
M is an alkali metal cation and n is 1 or
M is an alkaline earth metal cation and n is 2 and
R is a C₄₋₂₀ alkyl, C₄₋₂₀ alkenyl, C₆₋₂₀ cycloalkyl or C₆₋₂₀ cycloalkenyl radical,
as internal antistatic agents, take-off and winding aids for cast films of high molecular weight, thermoplastic, aromatic polycarbonates in quantities of 0.01 to 2% by weight based on the total weight of polycarbonate and salt corresponding to formula 1.

2. The use claimed in claim 1 in quantities of 0.05 to 1% by weight, based on the total weight of polycarbonate and salt corresponding to formula 1 in claim 1.

3. A process for the production of cast polycarbonate films, characterized in that solutions of thermoplastic, aromatic polycarbonates in standard polycarbonate solvents are mixed with salts corresponding to formula 1 in claim 1 in quantities of 0.01 to 2% by weight, based on the total weight of polycarbonate plus salt of formula 1 either as such or in solution in the polycarbonate solvents and the mixture obtained is subsequently processed in known manner to cast films.

4. A process as claimed in claim 3, characterized in that the polycarbonate solutions are mixed with salts of formula 1 in claim 1 in quantities of 0.05 to 1% by weight.

5. Cast polycarbonate films containing 0. 01 to 2% by weight, based on the total weight of polycarbonate plus salt, of salts corresponding to formula 1 in claim 1.

6. Cast polycarbonate films as claimed in claim 5, containing 0.05 to 1% by weight, based on the total weight of polycarbonate plus salt, of salts corresponding to formula 1 in claim 1.

7. The use of the polycarbonate films claimed in claims 5 and 6 in the electrical field and in the optical field.

## Revendications

1. Utilisation de sels alcalins ou alcalino-terreux d'esters sulfosucciniques de formule 1 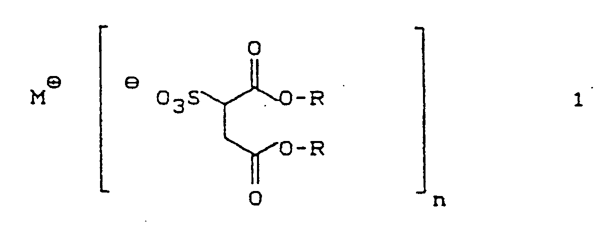 dans laquelle
M = cation de métal alcalin et n = 1 ou bien
M = cation de métal alcalino-terreux et n = 2, et
R = alkyle en C₄-C₂₀, alcényle en C₄-C₂₀, cycloalkyle en C₆-C₂₀, cycloalcényle en C₆-C₂₀,
en tant qu'agents antistatiques internes, facilitant le décollement et l'enroulement de feuilles coulées en polycarbonates aromatiques thermoplastiques à haut poids moléculaire, en quantités de 0,01 à 2 % du poids total de polycarbonate et de sel de formule 1.

2. Utilisation selon revendication 1, en quantités de 0,05 à 1 % du poids total de polycarbonate et de sel de formule 1 de la revendication 1.

3. Procédé de préparation de feuilles coulées de polycarbonates, caractérisé en ce que l'on mélange des solutions de polycarbonates aromatiques thermoplastiques dans les solvants usuels avec les sels de formule 1 de la revendication 1 en quantités de 0,01 à 2 % du poids total de polycarbonate et de sel de formule 1, ces sels étant mélangés tels quels ou à l'état de solutions dans les solvants du polycarbonate, puis on convertit le mélange obtenu de manière connue en soi en feuilles coulées.

4. Procédé selon revendication 3, caractérisé en ce que l'on mélange les solutions de polycarbonates avec les sels de formule 1 de la revendication 1 en quantités de 0,05 à 1 % en poids.

5. Feuilles coulées de polycarbonates contenant de 0,01 à 2 % en poids, par rapport au poids total de polycarbonate et de sel, de sel de formule 1 de la revendication 1.

6. Feuilles coulées de polycarbonates de la revendication 5, contenant de 0,05 à 1 % en poids, par rapport au poids total de polycarbonate et de sel, de sel de formule 1 de la revendication 1.

7. Utilisation des feuilles de polycarbonates des revendications 5 et 6 dans l'industrie électrique et le secteur optique.
